# EUROPÄISCHE PATENTANMELDUNG

(11) **EP 0 600 121 A1**
(43) Veröffentlichungstag der Anmeldung: **08.06.1994**
(21) Anmeldenummer: 92120563.9
(22) Anmeldetag: 02.12.1992
(51) Int. Cl.: G06F 13/40, G06F 12/08

(54) **Mikroprozessor**

(71) Anmelder: SIEMENS AKTIENGESELLSCHAFT, D-80333 München (DE)
(72) Erfinder: Mariutti, Peter, Dipl.-Ing., W-8165 Fischbachau 4 (DE); Schönberger, Franz, Dipl.-Ing., W-8000 München 45 (DE); Sulzer, Hans, Dipl.-Ing., W-8058 Erding (DE); Schmid, Richard, Dipl.-Ing., W-8000 München 70 (DE); John, Wolfgang, Dipl.-Ing., W-8000 München 40 (DE); Rohm, Peter, Dipl.-Ing., W-8068 Pfaffenhofen (DE)

(57) **Zusammenfassung**

Der erfindungsgemäße Mikroprozessor weist ein Dual-Port-RAM (36) auf, welches einerseits direkt mit dem Prozessorbus (5) und andererseits direkt mit dem Peripheriebus (6) verbunden ist. Dadurch können am Peripheriebus (6) angeschlossene Peripherieeinheiten (7a...n) parallel zum Prozessor (1) ohne Geschwindigkeitsverlust arbeiten.

## Beschreibung

Die Erfindung betrifft einen Mikroprozessor gemäß dem Oberbegriff des Anpruchs 1.

Werden auf einem Chip zusätzlich zum Mikroprozessor auch Speicher und Peripheriefunktionen integriert, so spricht man von einem sogenannten Mikrocontroller. Die zentrale Recheneinheit ist dabei oftmals ein sogenannter CISC-Prozessor (complex instruction set computer). Für besonders leistungsfähige Mikroprozessoren/Mikrocontroller insbesondere in Hinblick auf Rechenleistung und Parallelverarbeitungsmöglichkeiten wird jedoch anstelle eines CISC-Prozessors ein sogenannter RISC-Prozessor (reduced instruction set computer) verwendet. Die Befehlsabarbeitung und Datenabarbeitung kann bei derartigen Prozessoren z.B. in einer mehrstufigen Pipelineverarbeitung "on Chip" stattfinden. Als Programmspeicher sind meistens ebenfalls "on Chip" ein Befehlsfestwertspeicher, ein Befehlsarbeitsspeicher sowie ein Befehlscachespeicher vorgesehen. Weiterhin ist eine Bussteuereinheit vorgesehen, welche den Prozessor mit den verschiedensten Peripherieeinheiten verbindet. In der Regel wird die Rechenleistung des Prozessorsystems durch externe Speicherzugriffe begrenzt, die wesentlich langsamer ablaufen können als "chip-interne" Schreib-Lese- oder Rechenoperationen.

Um dennoch besonders schnell beim Lesezugriff auf extern angeschlossene Speicher zu sein, weisen derartige Systeme sogenannte "Cache-Speicher" auf. Bei jedem externen Zugriff auf einen Speicher, der meistens über eine Bussteuereinheit erfolgt, wird das gelesene Datum gleichzeitig in die zentrale Recheneinheit gelesen und in den "Cache"-Speicher geschrieben. bei einem erneuten Zugriff auf eine bereits einmal gelesene Speicherzelle muß dann nicht erneut der relativ langsame externe Speicher nochmals ausgelesen werden, sondern es kann aus dem sehr schnellen "Cache-Speicher" praktisch ohne Geschwindigkeitsverlust gelesen werden. Ein Schreiben auf externe Speicherzellen erfolgt ebenfalls gleichzeitig in den "Cache-Speicher" und in den externen Speicher.

Weist der Mikrocontroller einen besonders hochleistungsfähigen Prozessor auf, so wird dessen Leistung oftmals aber durch eventuell langsam arbeitende Peripherieeinheiten stark gebremst, da deren Schreib-Lesezugriffszeiten oft deutlich unter der des Prozessors liegen.

Aufgabe der vorliegenden Erfindung ist es daher, einen Mikroprozessor anzugeben, dessen leistungsfähiger Prozessor möglichst wenig durch an ihn angeschlossene Peripherieeinheiten beeinträchtigt wird.

Diese Aufgabe wird durch den kennzeichnenden Teil des Anspruchs 1 gelöst. Weiterbildungen sind Kennzeichen der Unteransprüche.

Die Erfindung wird nachfolgend anhand von 2 Figuren näher erläutert.
Es zeigen:
Figur 1 ein Blockschaltbild der erfindungsgemäßen Anordnung,
Figur 2 eine Erweiterung der in Figur 1 gezeigten erfindungsgemäßen Anordnung.

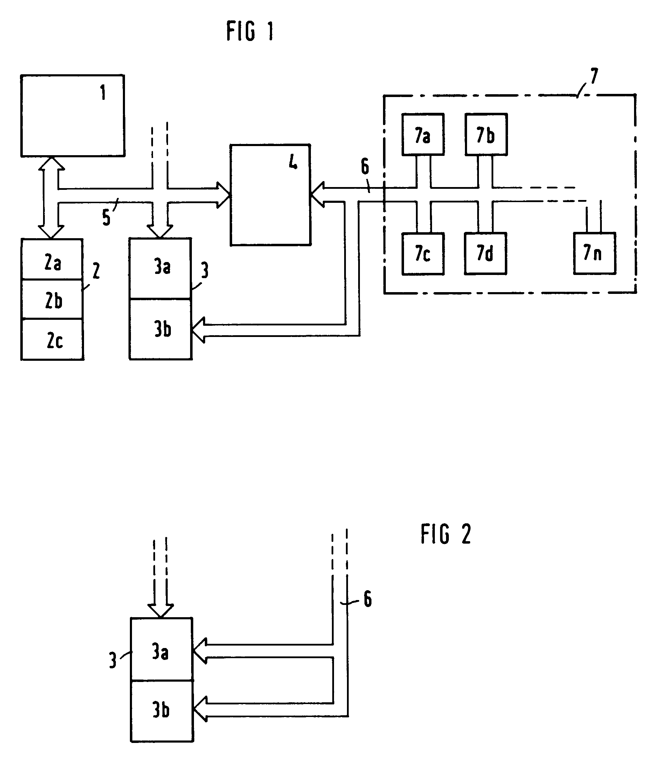

Das Blockschaltbild in Figur 1 zeigt einen Mikrocontroller mit einem Prozessorkern 1, z.B. ein RISC-Prozessor, sowie ein an diesen Prozessorkern angeschlossenen Bus 5. An dem Prozessorkern ist über den Bus 5 eine Speichereinheit 2 angeschlossen. Diese kann wahlweise aus einem Befehlscachespeicher 2a und/oder einem Befehlsarbeitsspeicher 2b und/oder einem Befehlsfestwertspeicher 2c bestehen. Weiterhin ist an diesen Bus ein Datenspeicher 3 angeschlossen. Dieser kann z.B. aus einem Datencachespeicher 3a und/oder einem Dual-Port-RAM 3b bestehen. Durch die strichpunktierten Linien ist angezeigt, daß an dem Prozessor zusätzlich noch z.B. eine Fließkomma-Arithmetikeinheit und/oder eine Bitbearbeitungseinheit und/oder eine schnelle Multipliziereinheit angeschlossen sein kann. Weiterhin ist der Bus 5 mit einer Bussteuereinheit 4 verbunden. An diese Bussteuereinheit 4 ist ein sogenannter Peripheriebus 6 angeschlossen. Über diesen Peripheriebus 6 können verschiedenste Peripherieeinheiten 7 angeschlossen werden. Eine Vielzahl dieser Perpherieeinheiten ist mit 7a, b, c, d...n bezeichnet. Dies können z.B. ein DMA-Kontroller, Servicerequest-Kontroller, oder verschiedene Master bzw. Slave Peripherieeinheiten sein. Der Bus 6 ist weiterhin mit dem zweiten Anschluß des Dual-Port-RAMS 3b verbunden.

Der Peripherieblock besteht neben kundenspezifischen und dadurch ständig wechselnden Peripherieeinheiten z.B. aus einem leistungsfähigen DMA-Kontroller, und oder z.B. einem prioritätsgesteuerten Servicerequest-Kontroller usw.

Die Bussteuereinheit weist sämtliche zur Steuerung des Peripheriebusses notwendigen Einheiten auf. Dies können z.B. Adressdecoder, Timing-Generatoren usw. sein.

Die Peripherieblöcke 7a...n kommunizieren untereinander über diesen ihnen zugeordneten Peripheriebus 6.

Um auch einen besonders schnellen Zugriff auf von der zentralen Recheneinheit bereitgestellten oder bereitzustellenden Daten zu haben, kann über die erfindungsgemäße Anordnung eine Peripherieeinheit auch über den Bus 6 direkt auf das Daten-RAM 3b des Mikrocontrollers zugreifen.

Will eine Peripherieeinheit 7a...n auf Daten im Datenspeicher 3b zugreifen, so erfolgt dies bei bisherigen Prozessoren gemäß dem Stand der Technik dadurch, daß die zentrale Recheneinheit 1 über die Bussteuereinheit 4 auf die Peripherieeinheit 7a...n zugreift und das entsprechende Datenwort bzw. die entsprechenden Datenwörter erhält und diese in einem nachfolgenden Arbeitsgang im Datenspeicher 3b ablegt. Benötigt eine Peripherieeinheit 7a...n Daten aus dem Datenspeicher 3b, so wird ein entsprechend umgekehrter Vorgang eingeleitet.

Durch die erfindungsgemäße Anordnung kann aber nun eine Peripherieeinheit 7a...n direkt auf das Daten-RAM 3b zugreifen. Dadurch daß als Daten-RAM ein Dual-Port-RAM verwendet wird, wird dabei die Leistungsfähigkeit der zentralen Recheneinheit 1 in keiner Weise beeinträchtigt.
In bestimmten Anwendungsfällen kann es erwünscht sein, daß die Peripherieeinheiten 7a...n nicht direkt Zugriff auf das Dual-port-RAM 3b haben. Dies kann z.B. aus Gründen der Sicherheit in spezielle Systemen erforderlich sein, bei denen ein unerwünschtes Überschreiben der Daten im Dual-Port-RAM 3b schwerwiegende Folge hätte (z.B. im Automobilbereich bei der Motorsteuerung, ABS usw.). In einer erfindungsgemäßen Weiterbildung kann z.B. lediglich ein am Peripheriebus 6 angeschlossener DMA-Controller mit dem Dual-Port-RAM 3b kommunizieren. Eine am Peripheriebus 6 angeschlossene Einheit 7a...n müßte dann über einen ihr zugeordneten Kanal die gewünschten Daten ins/vom Dual-Port-RAM 3b über den DMA-Controller schreiben/lesen.

Figur 2 zeigt einen Ausschnitt aus Figur 1 mit dem Datenspeicher 3 bestehend aus dem Datencachespeicher 3a und dem Dual-Port-RAM 3b. Die Anordnung ist derart erweitert, daß auch der Cache-Speicher 3a als Dual-Port-Cache-Speicher ausgebildet ist und sein zweiter Schreib/Lese-Speicher mit dem Peripheriebus 6 verbunden ist.

Somit kann eine Peripherieeinheit 7a...n auch mit dem Cache-Speicher direkt Daten austauschen ohne die zentrale Recheneinheit 1 zu verlangsamen und ohne auf den externen Speicher beim Lesen zugreifen zu müssen. Beim Schreiben müßte allerdings auch gleichzeitig in den externen Speicher geschrieben werden.

Selbstverständlich kann auch hier wieder eine Einschränkung vorgesehen werden, nämlich daß nur der DMA-Kontroller Zugriff auf das Dual-Port-Cache-RAM hat.

## Patentansprüche

1. Mikroprozessor mit einer zentralen Recheneinheit (1) einer Bussteuereinheit (4), welche über einen ersten Bus (5) mit der zentralen Recheneinheit (1) verbunden ist, einem zweiten Bus (6), der durch die Bussteuereinheit (4) gesteuert wird und eine Vielzahl von integrierbaren Peripherieeinheiten (7a...n) mit der Bussteuereinheit (4) verbindet,
**dadurch gekennzeichnet,** daß ein "Dual-Port"-Speicher (3b) vorgesehen ist, dessen erster Schreib-Lese-Anschluß mit dem ersten Bus (5) und dessen zweiter Schreib-Lese-Anschluß mit dem zweiten Bus (6) verbunden ist.

2. Mikroprozessor nach Anspruch 1,
**dadurch gekennzeichnet,** daß am ersten Bus (5) ein Daten-"Cache"-Speicher (3a) geschaltet ist.

3. Mikroprozessor nach Anspruch 2,
**dadurch gekennzeichnet,** daß der Daten-"Cache"-Speicher (3a) als "Dual-Port"-Speicher ausgebildet ist, dessen erster Schreib-Lese-Anschluß mit dem ersten Bus (5) und dessen zweiter Schreib-Lese-Anschluß mit dem zweiten Bus (6) verbunden ist.

4. Mikroprozessor nach einem der vorhergehenden Ansprüche,
**dadurch gekennzeichnet,** daß am Peripheriebus ein DMA-Controller angeschlossen ist.

5. Mikroprozessor nach Anspruch 4,
**dadurch gekennzeichnet,** daß nur der DMA-Controller Zugriff auf einen ''Dual-Port'' -Speicher hat.
